(19) Europäisches Patentamt
European Patent Office
Office européen des brevets

(11) **EP 2 680 554 A1**

(12) **EUROPEAN PATENT APPLICATION**

(43) Date of publication:
**01.01.2014 Bulletin 2014/01**

(51) Int Cl.:
***H04M 1/725*** *(2006.01)*

(21) Application number: **13173354.5**

(22) Date of filing: **24.06.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **26.06.2012 IT RE20120045**

(71) Applicants:
- **Campana, Davide**
  **42022 Boretto (RE) (IT)**
- **Mazzoni, Manuel**
  **42044 Gualtieri (RE) (IT)**

(72) Inventors:
- **Campana, Davide**
  **42022 Boretto (RE) (IT)**
- **Mazzoni, Manuel**
  **42044 Gualtieri (RE) (IT)**
- **Cavazzoni, Roberto**
  **42044 Gualtieri (RE) (IT)**

(74) Representative: **Baroni, Matteo et al**
**Metroconsult S.r.l.**
**Foro Buonaparte, 51**
**20121 Milano (IT)**

# (54) Mobile telephony apparatus with multiple communication modes

(57) Telephony apparatus comprising a mobile phone (100) with an alternative operating mode with low emission of electromagnetic waves, which uses under-converted radio transceiving to automatically operate at a lower frequency and/or power when in a household environment. Said apparatus further comprises a respective radio base (200) which, when said phone (100) is in low-emission mode, acts as a GSM-GPRS radio transceiving bridge between said phone and an external mobile telephony radio base station (400).

Fig. 3

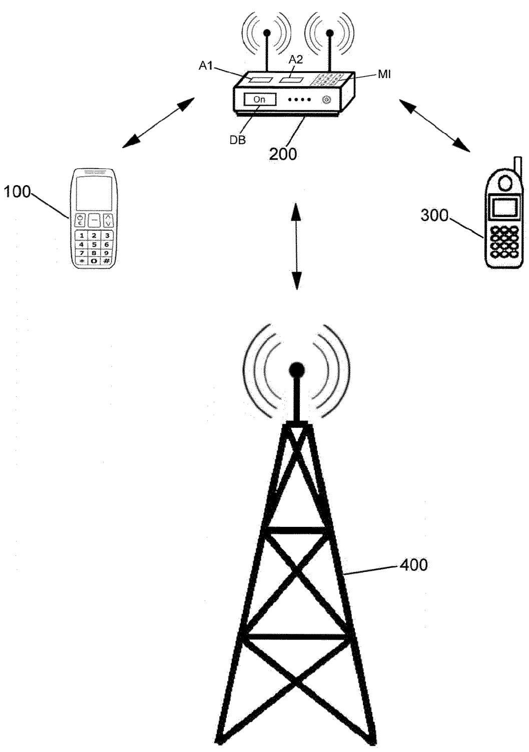


EP 2 680 554 A1

## Description

The present invention relates to a multifunction wireless telephony apparatus, more particularly to a mobile phone (100) capable of switching and configuring itself to operate as a household cordless phone for local use in communication with a respective household radio base (200). More specifically, the inventive object comprises a local communication mode for extra-household use, consisting of automatically switching from a first mode of normal UMTS/GSM-GPRS cellular operation ("normal mode") to a second mode of local operation ("household mode"), in the latter mode the radio transmission power becoming advantageously lower than in normal mode, while still preserving all the functions and usefulness of the mobile phone (100). In said "household mode", said radio base (200) acts as a standard-power local repeater to receive the communication signals from said phone (100) and re-transmit them to the nearest external cellular network station (400), and vice versa. As is known, cellular or mobile phones are wireless voice and data communication devices with global coverage, the mass diffusion of which, promoted by increasingly advanced functions and services, has made them become through the years indispensable and common means of communication. The mobile telephony service is provided through a complex broadcasting system, i.e. the radio mobile network, distributed over the territory and constituted by a number of elements enabled to communicate with one another:

- ➢ Central processing stations that locate the user and manage the mobility thereof;
- ➢ Central stations that physically connect the lines;
- ➢ Radio Base Stations (RBS);
- ➢ Mobile phones (mobile terminals).

In Italy, the most widespread radio mobile systems are the GSM-GPRS digital system (acronym for Global System for Mobile Communications) and the UMTS communication system (Universal Mobile Telecommunications System), which allows for high-speed data transfer. Digital systems first transform the signal into numerical values; forwarding occurs at a subsequent stage. For said UMTS and GSM-GPRS systems, frequencies range from 900 MHz to 2,200 MHz, while power may vary in the range of 20-25 Watt. More specifically, the operation of mobile phones is based on high-frequency modulated radio signals received and transmitted by a wireless telephone device (mobile user terminal) from/to the nearest radio base station (RBS), commonly referred to as repeater, which in turn acts as a local transceiver station. Radio base stations consist of antennae that transmit the signal to the mobile phone and antennae that receive the signal transmitted by the mobile phone. Such antennae are installed on suitable pylons or on buildings, usually at a height of 25-30 m, so that the signal can be irradiated over a limited portion of territory to be covered. When a station receives radio waves from a mobile phone, it redirects them towards another point called "switch" (another RBS), which in turn redirects the call to yet another station, and so on until it reaches a mobile terminal or the normal fixed telephone network, depending on the type of call (radio mobile network). Base stations are limited by two factors: the number of calls that they can handle and the geographic area that they can cover. In order to cope with new requirements and meet the increasing demand, over the years the cellular network has become more and more capillary and distributed over the territory, keeping pace with technologic evolution, overcoming physical and connection limits, and ensuring better interoperability even with foreign cellular networks (roaming). Such stations are located in strategic areas called "cells" (zones), hence the name "cellular phone", each of which is assigned a certain number of channels on the frequency band in use. Mobile telephony uses said cells because radio frequencies are limited and must be shared among multiple users (sharing of the radio medium); therefore, said stations are positioned and distributed over the territory in a number and manner such that the available radio frequency can be reused in other cells, so that the network can handle a much larger number of calls. To increase the connectivity radius and the maximum number of users of a single station, so as to be able to adequately serve a given area, many coverage radio base stations are commonly used in combination with suitable management protocols and multiple-access technologies. In particular, for the radio communication between a radio base station and mobile terminals, the GSM system uses the TDMA/FDMA technology (acronym for "Time/Frequency Division Multiple Access"), which is based on a pair of full-duplex radio channels, with "frequency hopping" (switching) from one channel to another; this technology allows multiple users to share the same frequency range (radio spectrum) by automatically changing the transmission frequency. When a mobile phone gets too far away from a radio station, the system will automatically search for a closer cell, and the communication will be transferred to that cell without call interruption (handover). Furthermore, each station (or repeater) transmits at moderate power, so as to not interfere with the other stations in the same zone, while at the same time complying with the maximum values imposed by specific safety regulations concerning the risks caused by electromagnetic fields. In Italy, the radiation limit for exposition to an electric field for more than four hours a day has been set (by ministerial decree no. 381) to 6 Volt/metre, measured at a distance of one metre from the source. Mobile phones are very sophisticated electronic devices which are becoming increasingly widespread throughout the world, and the use of which is becoming more and more intensive. They have been for several years the subject of many studies aimed at verifying the possible side effects thereof due to the so-called electromagnetic pollution, or electrosmog, that high emission frequencies and transmission power might cause to human health. Research has been conducted for decades, and still goes on incessantly, on the potential consequences of radio waves, classifiable as "non-ionizing electromagnetic radiations". Such research activities refer to epidemiology, a biomedical discipline that studies the distribution and frequency of diseases and significant sanitary events in the population. Said non-ionizing radiations have a frequency below 10,000 THz (10exp15 Hz), and comprise the fields of radio frequencies (RF), microwaves (from 2 to 300 GHz) and infrared. The quantity of energy transported by radio frequency signals, and then transferred to irradiated human tissues, is not sufficient to break the chemical bonds of the molecules; therefore, those radiations which fall within the "RF" range are defined as non-ionizing. However, there are still doubts about their harmlessness. The biological effects of electromagnetic fields mainly depend on the power transported by the radiation, as well as on the frequency thereof (number of variation cycles per second, in Hz). The energy carried by an electromagnetic wave going through a biological tissue is dissipated within the tissue itself as heat (Joule effect). The oscillating magnetic field induces in the tissue an electric current that dissipates power because of the dielectric properties of the medium (resistance of the human body). Electromagnetic fields (EMF) at high frequency (≥10GHz) with a plane wave power density higher than 50 Watt/$m^2$ can cause biological damage by thermal effect. The acute effects of a magnetic field are due to induction of said electric current in the tissues (European regulations allow up to 20 Ampère/$m^2$ for electromagnetic fields from mobile phone frequencies), and range from interference with sensorial (visual and tactile) perception to ventricular fibrillation and tissue heating. Below are some data relating to the acute effects of a magnetic field (B) (measured in Tesla, symbol "T"), at a frequency (f) of 1 KHz, for different values of current density (J) (measured in mA/$m^2$) produced on the body:

- Tissue heating (with SAR=0.4 W/kg): 1,600,000 mT → 10,000 mA/$m^2$;
- Extrasystole induction (risk of fibrillation): 130,000 mT → 800 mA/$m^2$;
- Sensorial perception (magnetophosphenes): 16,000 mT → 100 mA/$m^2$;
- Italian regulations (f=1KHz): 1,625 mT → 10 mA/$m^2$;
- Epidemiological attention threshold (SAE): 3.3 mT → 0.020 mA/$m^2$. The latter current value, of the order of a few tens of millionths of an Ampère, is wholly negligible.

Where: Tesla (T) is a derived unit of measurement of the international system (SI), and is used to express the intensity of the induced magnetic field or magnetic induction (B);
SAR is the energy absorption rate mediated on the whole body per mass unit of body tissue (expressed in W/Kg).

As can be deduced from the above data, the current produced is directly proportional to the induced magnetic field. On account of the very low value of said epidemiological attention threshold (3.3 mT), it is assumed, as a reference of presumed maximum precaution not specified in the harmonized regulations of CENELEC (the appointed European commission), that radio frequency signals, even if they are emitted with an electromagnetic power density lower than the aforementioned 50 W/$m^2$, may in the long term, even after many years, cause biological damage with non-thermal effects. Although the regulations pertaining to the safety of electromagnetic fields have been well disciplined and defined by CENELEC on the basis of specific comparison tables, parameters and formulae for evaluating exposition limits and action levels in specific cases, the use of mobile phones, as well as of many other electronic devices of common use, has become so widespread a phenomenon that it deserves further in-depth investigations. To further investigate the bond between exposition to electromagnetic fields and human health, specific epidemiological studies have been conducted since the second half of the nineties in the last century, which are still under way. Such medical studies are trying, in particular, to find a correlation between prolonged exposition to fields, even weak ones, and the onset of diseases (among which infantile tumours and leukemias), and simultaneously to discover the biological operation of the interaction between electromagnetic fields and biological systems. The World Health Organization (WHO) has published an information paper that examines the latest reports on the use of radio waves, particularly at the frequencies used by mobile phones and their base stations. The WHO has concluded that none of such reports indicates that exposition to RF fields of mobile phones, or their base stations, can pose any health risks. However, notwithstanding such conclusions and the relatively low transmission power of cellular networks and systems (which nevertheless sometimes exceed said 50 W/$m^2$ due to various factors), specific studies have shown that prolonged exposition to radiations of mobile phones and repeaters may in some cases interfere with the cells' DNA and repair mechanism (source: Journal of Cellular Biochemistry). Half of the world population is now using mobile phones, which emit electromagnetic radiations in the form of microwaves (typically around 2 GHz), and 80% of the energy emitted by a mobile phone during a conversation is distributed over the body. The body part which is most affected by said exposition is the head, since cellular receivers are normally held against the ear; in particular, approximately half of the energy emitted by the phone is absorbed by the brain and the ear, the latter being sensitive to thermoelastic expansion phenomena. At present, it is not yet known to what extent human organisms are affected by these radio frequency fields and the power thereof, nor what any long-term effects on irradiated individuals may be. The mammalian brain is generally protected against chemical substances contained in the blood by the so-called hematoencephalic barrier, which is formed by cells. Said barrier prevents compounds circulating in the blood from reaching the brain, thereby protecting it from any potentially dangerous substances.

An important article about the biological effects of radiations of mobile phones has been first published in Ljusglimten (2008), a publication of FEB (the Swedish electrosensitive society). The article entitled "Effects of mobile phone radiation upon the mammalian brain" analyzes the results of a research concerning the effects of electromagnetic radiation from mobile phones using the most widespread communication system, i.e. the above-mentioned GSM system, on rats exposed for more or less protracted periods to signals having a frequency of 915 MHz (915 millions of cycles per second). Studies have shown a temporary increase in penetration of albumin (a plasma protein) through said hematoencephalic barrier, as well as an alteration of the functionality of the cellular membranes and of the brain hippocampus (the organ responsible for mnemonic functions). The effects observed relate to exposition to low levels of radio frequency radiations, and are in all cases non-thermal. However, these results are ineffectual, in that it is impossible to make a comparison between the rat brain and the human brain because the differences in shape and dimensions result in different patterns of absorption of the electromagnetic field radiations. Even in brains of similar mammalian species, certain parts of the brain may have different functions. The fact that hematoencephalic barrier penetration, mnemonic capacity reduction and genetic mutations have been ascertained in rats does not necessarily mean that there may be the same response in human beings. Further epidemiological studies will be able to provide a first answer to this question in the next ten or twenty years; until then, however, in many researchers' opinion it would be best to apply the so-called "precautionary principle", i.e. to limit and optimize the use of cellular devices for precautionary reasons. Therefore, while still not considering the use of mobile phones to be *per se* harmful, it is certainly preferable, given the relatively short time that has elapsed since their global diffusion on the market, and their massive daily usage in the last ten years, to limit the use of these devices, which emit close signals with non-negligible frequency and, most importantly, intensity, and which somehow interact with the cellular processes of living beings. To better understand the electromagnetic field phenomenon and the quantities that determine it, it must be analyzed from a mathematical viewpoint. In electrodynamic physics, an electromagnetic field is defined as a space region occupied by an electromagnetic wave, which is generated by moving electric charges. Maxwell's equations, which in classical electrodynamics express the evolution of electromagnetic fields with respect to the distributions of charges and currents that generate them, are four, the fourth of which is shown below:

$$\oint_{\delta S} \mathbf{B} \cdot \mathrm{d}\mathbf{r} = \mu \cdot I + \mu\varepsilon \frac{\mathrm{d}}{\mathrm{d}t} \int_{S} \mathbf{E} \cdot \mathrm{d}\mathbf{s}$$

Where: B is the magnetic field (measured in Tesla), $I$ is the electric current (in Ampére), E is the electric field (in V/m), $\mu$ is magnetic permeability (the medium's attitude to magnetization) and is $\varepsilon$ electric permittivity (the dielectric medium's attitude to polarization)

According to this equation, the circulation of the magnetic field (B) along a closed line equals the sum of a contribution given by the electric current ($I$) and another contribution given by the variation over time of the electric field flux (E) through the surface delimited by the closed line (Figure 1). If said electric field (E) and magnetic field (B) are sufficiently weak, the matter can be considered to respond linearly, and hence such vectorial functions (E, B) can be defined, in a vacuum, by the following simplified formulae:

$$B = \mu_0 H \qquad \frac{E}{H} = Z_0 \qquad Z_0 = \sqrt{\frac{\mu_0}{\varepsilon_0}} = 377\ \Omega \qquad \mathbf{D} = \varepsilon\mathbf{E}$$

Where: Zo is the impedance of the transmission medium (vacuum);
D is electric induction (expressed in Coulomb/$m^2$);
H is the magnetic field in the materials (expressed in A/m).

More in detail, a plane electromagnetic wave deriving from the foregoing phenomenon is constituted by two components, an electric field one and a magnetic field one, which are perpendicular to each other and which are both orthogonal to the direction of propagation of the wave (Figure 2). Such components are not constant over time, and oscillate between a maximum and a minimum at the oscillation frequency ($f$). With each frequency (number of oscillations per second), a wavelength ($\lambda$) is associated which is inversely proportional to the frequency itself according to the following relation: $f = \frac{c}{\lambda}$ Where: *c* is the speed of light in a vacuum (300,000 Km/s).

As frequency changes, the electromagnetic wave takes on characteristic properties. Since a transported energy is associated with each wave which is proportional to frequency, high-frequency waves transport a larger quantity of energy. With particular reference to energy transportation by electromagnetic waves, the waves theory indicates that the energy (*E*) produced by a periodic wave is directly proportional to its wave number ($\overline{V}$), i.e. inversely proportional to its wavelength (λ), according to the following relation (1):

$$E = hc\bar{\nu}$$

Where: *E* is the energy, *h* is Planck's constant, *c* is the speed of light in a vacuum, and $\overline{V}$ is the wave number, which in turn is given by the following relation (2):

$$\bar{\nu} = \frac{f}{c}$$

From the above relations (1, 2), it can be understood that a wave's frequency value is directly proportional to the energy produced by it; in particular, it is the determinant variable thereof. By way of example, it should be noted that, if the frequency *f* is halved, the associated energy (E) will be halved as well, since the second term of the equation (1) is given by a pure product. Although frequency is not a parameter bound to the intensity of the source of emission of an electromagnetic field, the number of variations per second cyclically assumed by the signal (*f*) strongly affects the transported wave energy and thus may, for certain values and/or expositions, promote possible interference or interaction between electromagnetic waves and cells of living beings. By adopting appropriate known precautions to increase the physical distance from the emitting device (cell phone), it is possible to reduce the user's exposition; however, unlike normal low-frequency electromagnetic fields, which decrease very rapidly as the distance from the charges that generate it (field sources) increases, radio wave fields are transmitted at high frequency in order to be able to cover long distances from the source, and therefore undergo much less attenuation. It follows that the simple use of a headset or of the hands-free function, although useful, does not eliminate, but only reduces, the potential risks of exposition, also because the cellular device must still remain in the immediate vicinity of the individual using it. In the light of the foregoing, the only other way to attenuate the exposition to electromagnetic fields is to decrease the intrinsic transmission power, preferably in association with a reduction in the signal frequency (see relations 1 and 2 above). However, as aforementioned, the power and frequency values used by cellular devices are linked to precise technical requirements imposed by current technologies and standards, which are essential to be able to cover long distances with less sensitivity to environmental interferences and higher data transfer speeds, thus ensuring the system's spectral efficiency. Therefore, if on the one hand there are important reasons that justify the use of high frequencies associated with presumably harmless transmission power values, on the other hand it is apparent that it is preferable, for precautionary reasons, to reduce to a minimum the exposition to electromagnetic waves produced by mobile phones, aiming at decreasing, whenever possible, the irradiation thereof towards the human body, without however impairing the technical performance of such devices.

It is one object of the present invention to reduce the exposition to electromagnetic emissions of cellular devices within household environments.

It is another object of the invention to provide an efficient and functional mobile telephony apparatus, in particular a mobile phone, which is **characterized in that** it can, if necessary, operate at lower frequency and power values within a household environment.

It is a further object of the present invention to provide a technical solution which, while not changing the final communication standards and protocols of cellular systems, allows the mobile apparatus to vary said signal parameters in predetermined household environments.

It is also one object of the present invention to provide a mobile phone capable of operating as a household cordless phone and/or as a mobile phone by converting its transmission power to a significantly lower value than normally required, and by using a respective remote household radio base acting as a UMTS, GSM-GPRS and/or cordless repeater.

It is another object of the present invention to provide a method for designing a wireless device, which advantageously implements the dual cellular and cordless function, thus combining versatility and energy saving into the same mobile device. It is yet another object of the present invention to provide an efficient and functional mobile phone, which is characterized by lower energy consumption and higher safety from a health protection viewpoint.

These and other objects are substantially achieved through a multifunction wireless device in accordance with the present invention.

Further features and advantages will become more apparent from the annexed drawings, wherein:

- Fig. 1: shows a generic drawing of the magnetic field lines (B) and of the electric currents that compose the magnetic field;
- Fig. 2: represents, on a Cartesian graph, the two orthogonal waves (B and E) that compose a variable electromagnetic field;
- Fig. 3: shows a representative embodiment of the mobile telephony apparatus of the present invention, including a multifunction mobile phone (100), a radio base (200), a cordless phone (300), and an external cellular station (400);
- Fig. 4: shows the display (D) of said mobile phone (100) self-configured to operate in household mode, indicating the three possible operating modes;
- Fig. 5: is a simplified circuit block diagram of the mobile phone (100);
- Fig. 6: is a simplified circuit block diagram of said radio base (200).

The mobile telephony apparatus of the invention, shown in the above-listed drawings, offers a significant remedy to the above-described problems and potential risks within the frame of household use.

The invention will be described below with reference to an exemplary, and hence non-limiting, preferred embodiment thereof.

In particular, with reference to the drawings shown in said Figures 3, 5 and 6, the mobile telephony apparatus of the invention consists of a mobile phone 100 (first user terminal) and a fixed transceiver device associated therewith, a respective electrically-powered radio base 200 arranged in a house or an office and connected to the normal telephone line (POTS or ISDN) through a pair of wires of the line itself (telephone duplex cable). In addition to said mobile phone (100), there is also a second mobile terminal (300) for exclusive household use, such as a cordless phone, which uses the same base (200). Said mobile phone (100) comprises a self-switching function for switching from a first transmission state to a second transmission state for controlled emission of electromagnetic waves; more in particular, it uses a transceiver system with self-conversion from a standard UMTS/GSM-GPRS communication mode ("normal mode") to a digital encrypted lower-power and/or lower-frequency operating mode ("household mode"), and vice versa. Said mobile phone (100) is equipped with:

- At least one memory SIM card (SC) with which a user with a respective telephone number is associated, comprising the line connection/communication protocols of a telephone operator, the personal data of a subscriber, text messages (SMS), a phone book and any additional services;
- A signal processing unit (50) comprising:
    - A Cordless RF unit (30) for receiving/transmitting and modulating/demodulating electromagnetic signals according to a communication system for cordless phones;
    - A Cellular RF unit (40) for receiving/transmitting and modulating/demodulating electromagnetic signals according to a UMTS/GSM-GPRS system for mobile phones; The RF units (30, 40) are both shielded to avoid mutual interferences;
- At least one omnidirectional antenna for remotely capturing or emitting the electromagnetic signals of said RF units (30, 40);
- A microphone (70), which receives and converts sounds into an analog electric signal;
- A display (D) showing a variety of user information, including the state of operation of said phone (100) between said "normal mode" and "household mode";
- A sound receiver (60), which converts into sounds the demodulated electronic signals received from said conversion unit (80);
- An analog-digital/digital-analog conversion unit (80) for modulating/demodulating the signals from/to said microphone (70) and receiver (60), respectively directed to and coming from said RF units (30, 40);
- A user interface (90) having a state of operation which varies upon a physical intervention of said user, preferably defined through alphanumeric keys;
- A detection unit (UR) for reading and interpreting the variations of the state of operation of said user interface (90);
- A processing unit (UE) for controlling and managing the functions of all units of the mobile phone (100);

- A storage unit (UM) where the processing unit (UE) reads and writes calculation, management and archive data.

Said radio base (200) consists of a UMTS/GSM-GPRS and Cordless transceiving wireless module connected to said phone (100) and operating at frequencies and with protocols of mobile and cordless phones, respectively. Said base (200) comprising:

- A user interface (260) comprising numerical/alphanumerical interfacing means (MI) allowing said user to input data, codes and/or telephone numbers;
- A detection unit (270) for reading and interpreting state variations of said interfacing means (MI);
- A display (DB) showing the state of operation of said base (200) and a plurality of operating functions, including time and input data, and indicating the presence, as well as the operating mode, of said mobile phone (100) and/or of said second mobile terminal (300) associated with the same base (200);
- A first compartment (A1) for accommodating and charging said mobile phone (100);
- A second compartment (A2) for accommodating and charging said second mobile terminal (300);
- Two omnidirectional antennae (210, 230), preferably internal, with two respective RF modules (220, 240), one (210) for distributing low-power connectivity via cordless or cellular system, and the other (230) for connecting to the UMTS/GSM-GPRS cellular network with frequencies typically comprised between 832 MHz and 2.75 GHz (depending on the country and on the assigned channel bands);
- A UMTS/GSM/Cordless signal processor (250) for modulating/demodulating the signals to be transmitted and received;
- A SIM card emulator circuit (ES) for reproducing the electronic profile of the user associated with the SIM card (SC) of said mobile phone (100);
- A central processing unit (UC) for calculating, controlling and managing the functions of all units of said base (200);
- A storage unit (UM) for reading and writing system and user data by said central processing unit (UC).

More in particular, said base (200) operates as a radio bridge-converter between an external cellular station (400) and said mobile phone (100), thereby allowing the latter to connect to the radio mobile network with a significantly lower transmission power than normally necessary, thus reducing the electromagnetic wave emission level to which the user is exposed while using said mobile phone (100), and also considerably reducing the energy consumption of said mobile terminal (100). Said base (200) is associated with at least one mobile subscription. During a first installation stage, the user temporarily enters into the base (200) the SIM card (SC) of the mobile phone (100) to be associated with the base (200) itself. The latter then prompts the user, via said interfacing means (MI), to enter a secret number corresponding to the SIM card (SC) of the mobile phone (100) in order to receive the authorization to electronically register the user. If the number is validated, i.e. it corresponds to a PIN security number associated with the SIM card (SC) of said phone (100), then the latter will be registered in the base (200), which, through said SIM card emulator (ES), is prearranged for simulating the behaviour and electronic profile of said SIM, thus replacing, from a radio mobile user's functional point of view, said mobile phone (100). Following registration, the base (200) emits a periodic check signal to ascertain the presence of the registered mobile terminal, in particular of said phone (100). When the latter is detected by said base (200), this assigns to the same mobile phone (100) the use of a given frequency channel for directing an optimal communication. The phone (100) is then identified (100), with the latter sending to the base (200) a data packet containing information for authentication of its SIM card (SC). Said information is received and decoded by the base (200), which compares it with the information previously stored in order to verify it. Once such information has been validated, said base (200) activates said emulator (ES) and serves the respective registered user by establishing a connection between the closest radio base station (400) and the mobile phone (100) by using the above-described cellular network communication modes, thus acting as a radio bridge. At the same time, said mobile phone (100) changes its state of operation from "normal mode" to "household mode" (lower power), indicating this change on its display (D), preferably along with an audible signal. The base (200) thus configured technically replaces said phone (100), since it is actually recognized as the latter (100) by the radio base station (400); in particular, it emulates the electronic user profile of the SIM card (SC) of said phone (100), which was associated with the base (200) during the above-described registration step. Said base (200), when in the "idle" condition, regularly sends a short-range, low-intensity radio check signal to detect the presence of the associated cellular device (100), which, if it is within coverage of the household signal, will lock itself to the same base (200) and will automatically switch its communication status from the standard UMTS/GSM-GPRS mode to "household mode". In a first embodiment, said mobile phone (100) switches to a much lower transmission power while maintaining the same protocol (UMTS or GSM). In a second embodiment, when in household mode said cellular device (100) changes not only its transmission power, but also its communication protocol from the cellular UMTS/GSM protocol to a different encrypted digital telephony standard preferably operating at a lower frequency. In said household mode (in both of the above-mentioned embodiments), the phone keeps operating as a low-power cell phone and, depending on the function set by the user, also as a cordless phone, in addition or as an alternative to said cordless phone (300), by exploiting multiple channels. The auxiliary household coverage thus obtained can be interconnected to the mobile telephony network to benefit from all the services thereof, including Internet connection, said base (200) operating also as a cellular repeater and supporting the GPRS system, which includes the web functionality, and hence the Internet. By taking on the transceiving function on behalf of said mobile phone (100) it is associated with, in a first step that follows the identification of the user said base (200) must send, to the external radio base station (400) within its coverage range, the SSID, i.e. the information of the user identification module (SIM) of the same mobile phone (100), and therefore of the user that is being served, for authentication and authorization to use the radio mobile network. Once said authorization has been obtained, an encrypted data exchange is started between said radio base (200) and the external radio base station (400) via the UMTS/GSM-GPRS system. In the additional function provided by the present invention, wherein said mobile phone (100) also acts as a cordless phone, the cellular connection line remains active and the user continues to receive calls, text messages (SMS), multimedia messages (MMS) and voice messages while fully benefiting from the options and services of the radio mobile network. Said cordless phone (300) operates together with said mobile phone (100), sharing therewith the fixed telephony service being transmitted via radio by said base (200) in the household environment. In particular, every call addressed from or to a fixed telephone number via said base (200) is enabled on both said mobile phone (100) in cordless mode and the cordless phone (300), and, on a same fixed subscriber line, it is assigned to the first user terminal of said phones (100, 300) that forwards or accepts it. In the case of an unanswered call, the missed call and the respective information are stored into both of said user terminals (100, 300) under a "missed calls" item within a respective "call log". In the case of the aforementioned second embodiment of said mobile telephony apparatus, wherein said base (200) and said phone (100) do not communicate with each other via the low-power UMTS/GSM standard, but by using a different communication protocol for cordless systems, said base (200) will connect to said mobile phone (100) also at lower frequencies (from 390Mhz to 1,930Mhz). This cellular base-phone connectivity is distributed within an indoor environment, in particular within offices, houses or anyway private and relatively small areas, covering a preset distance of up to 100 metres in a straight line, depending on the technical requirements and technology in use. In the presence of walls, trees or other barriers, the signal may decay to approximately one third. The relatively short maximum distance between the mobile phone (100) and the respective radio base (200) still ensures proper localization of the mobile device (100) by the telephone operator, with a maximum error equal to said preset distance.

The invention offers significant advantages.

The mobile telephony apparatus according to the present invention can significantly reduce the emission of electromagnetic fields in a household environment, while also reducing the energy consumption of one or more mobile user terminals (mobile phones). In particular, the above-described devices and methods allow a user to use his/her own mobile phone within a household environment with peace of mind, without having to limit the length of the conversation or having to use any additional devices or services, such as a headset or the hands-free function, in order to safeguard his/her own health against any undesired long-term effects.

Furthermore, the measures, devices and method described above can be easily implemented at industrial level, since they only require technical solutions and technologies readily available on the market.

## Claims

**1.** Mobile telephony apparatus comprising:

- At least one mobile phone (100) with a self-switching function for switching from a first transmission state to a second transmission state for controlled emission of electromagnetic waves, which uses a transceiver system with self-conversion from a standard UMTS/GSM-GPRS communication mode ("normal mode") to a digital encrypted lower-power and/or lower-frequency operating mode ("household mode"), and vice versa, said mobile phone (100) comprising:

    • At least one housing for a SIM card (SC);
    • At least one first transceiving omnidirectional antenna;

- A radio base (200) with UMTS/GSM-GPRS/Cordless transceiver wireless unit function connected to said phone (100) and operating at frequencies and with protocols of mobile phones and cordless phones, respectively, said base (200) being provided with:

    • At least one first transceiving omnidirectional antenna (230);
    • A Cordless RF module (220) for receiving/transmitting signals with a communication system for cordless phones;

• A Cellular RF module (240) for receiving/transmitting signals with a UMTS/GSM-GPRS communication system for mobile phones, said RF modules (220, 240) being both shielded to avoid mutual interferences;
• A UMTS/GSM/Cordless signal processor (250) for modulating/demodulating the signals to be transmitted and received;
• A user interface (260) comprising interfacing means (MI) between a user and said base (200), said interfacing means having a state of operation which varies upon a physical intervention of said user;
• A detection unit (270) for reading and interpreting a variation of the state of operation of said interfacing means (MI), the latter being preferably defined by alphanumeric keys;
• A display (DB);
• At least one first compartment (A1) for accommodating and charging said mobile phone (100);
• A SIM card emulator (ES) for reproducing the electronic profile of the user associated with the SIM card (SC), said radio base (200) being adapted to be connected to a fixed telephone line;
• A central processing unit (UC) for calculating, controlling and managing the functions of all units of said base (200);
• A storage unit (UM) for reading and writing system and user data by said central processing unit (UC).

**2.** Mobile telephony apparatus according to claim 1, **characterized in that** said mobile phone (100) further comprises:

- A signal processing unit (50) provided with:

  • A Cordless RF unit (30) for receiving/transmitting signals with said communication system for cordless phones;
  • A Cellular RF unit (40) for receiving/transmitting signals with said UMTS/GSM-GPRS system for mobile phones, said RF units (30, 40) being both shielded to avoid mutual interferences;

- A microphone (70), which receives and converts sounds into an analog electric signal;
- A display (D) showing a variety of user information, including the state of operation of said phone (100) between said "normal mode" and "household mode";
- An analog-digital/digital-analog conversion unit (80) for modulating/demodulating signals;
- A sound receiver (60), which converts into sounds the demodulated electronic signals received from said conversion unit (80);
- A user interface (90) having a state of operation which varies upon a physical intervention of said user;
- A detection unit (UR) for reading and interpreting a variation of the state of operation of said user interface (90), the latter being preferably defined by alphanumeric keys;
- A processing unit (UE) for controlling and managing the functions of all units of said mobile phone (100);
- A storage unit (UM), where said processing unit (UE) reads and writes calculation, management and archive data.

**3.** Mobile telephony apparatus according to claim 2, **characterized in that** said radio base (200) emits a periodic short-range check signal to detect the presence of said mobile phone (100), said base (200) identifying said mobile phone by means of a data packet sent by the latter and containing information for identification and authentication of the SIM card (SC), the latter being comprised in the at least one housing of said mobile phone (100).

**4.** Mobile telephony apparatus according to claim 3, **characterized in that** said base (200) assigns to said SIM card (SC) the use of a predetermined frequency channel for directing an optimal communication with said mobile phone (100), the latter operating in said lower-power "household mode".

**5.** Mobile telephony apparatus according to claim 4, **characterized in that** said base (200) prompts a user to input, via interfacing means (MI), a number associated with the SIM card (SC) of said mobile phone (100) in order to electronically register the user, said number being validated corresponding to a security PIN code associated with the SIM (SC) of said phone (100).

**6.** Mobile telephony apparatus according to claim 5, **characterized in that** said base (200) acts as a radio bridge-converter between an external cellular station (400) and said mobile phone (100), said base (200) emulating the electronic user profile of said SIM card (SC).

**7.** Mobile telephony apparatus according to claim 6, **characterized in that** said mobile phone (100) switches to a "cordless mode" to operate also as a household cordless phone, said radio base (200) being connected to a fixed telephone line, said base (200) establishing a data exchange between said mobile phone (100) and said fixed telephone line.

8. Mobile telephony apparatus according to claim 6, **characterized in that** it further comprises at least one household cordless phone (300), said radio base (200) being connected to a fixed telephone line, said base (200) establishing a data exchange with said cordless phone (300) by sending and receiving data modulated on that fixed telephone line.

9. Mobile telephony apparatus according to claim 7, **characterized in that** it further comprises at least one household cordless phone (300), said radio base (200) being connected to a fixed telephone line, said base (200) establishing a data exchange with said cordless phone (300) by sending and receiving data modulated on that fixed telephone line.

10. Mobile telephony apparatus according to claim 6, **characterized in that** said mobile phone (100) establishes an Internet connection via said radio base (200), the latter being set to simultaneously manage a plurality of users and their respective mobile terminals.

11. Mobile telephony apparatus according to anyone of the previous claims, **characterized in that** said base (200) further comprises a second compartment (A2) for accommodating and charging another phone.

Fig. 1

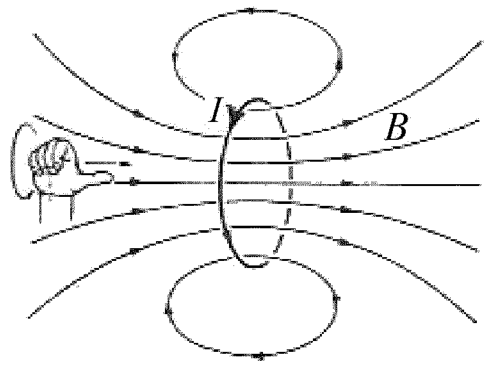
I
B

Fig.2

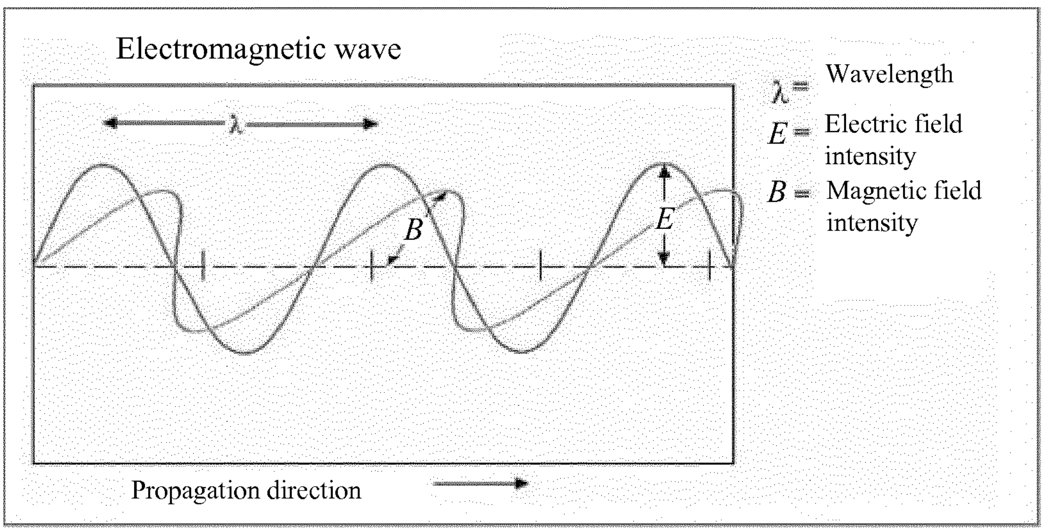
Electromagnetic wave
λ
B
E
λ = Wavelength
E = Electric field intensity
B = Magnetic field intensity
Propagation direction

Fig. 3

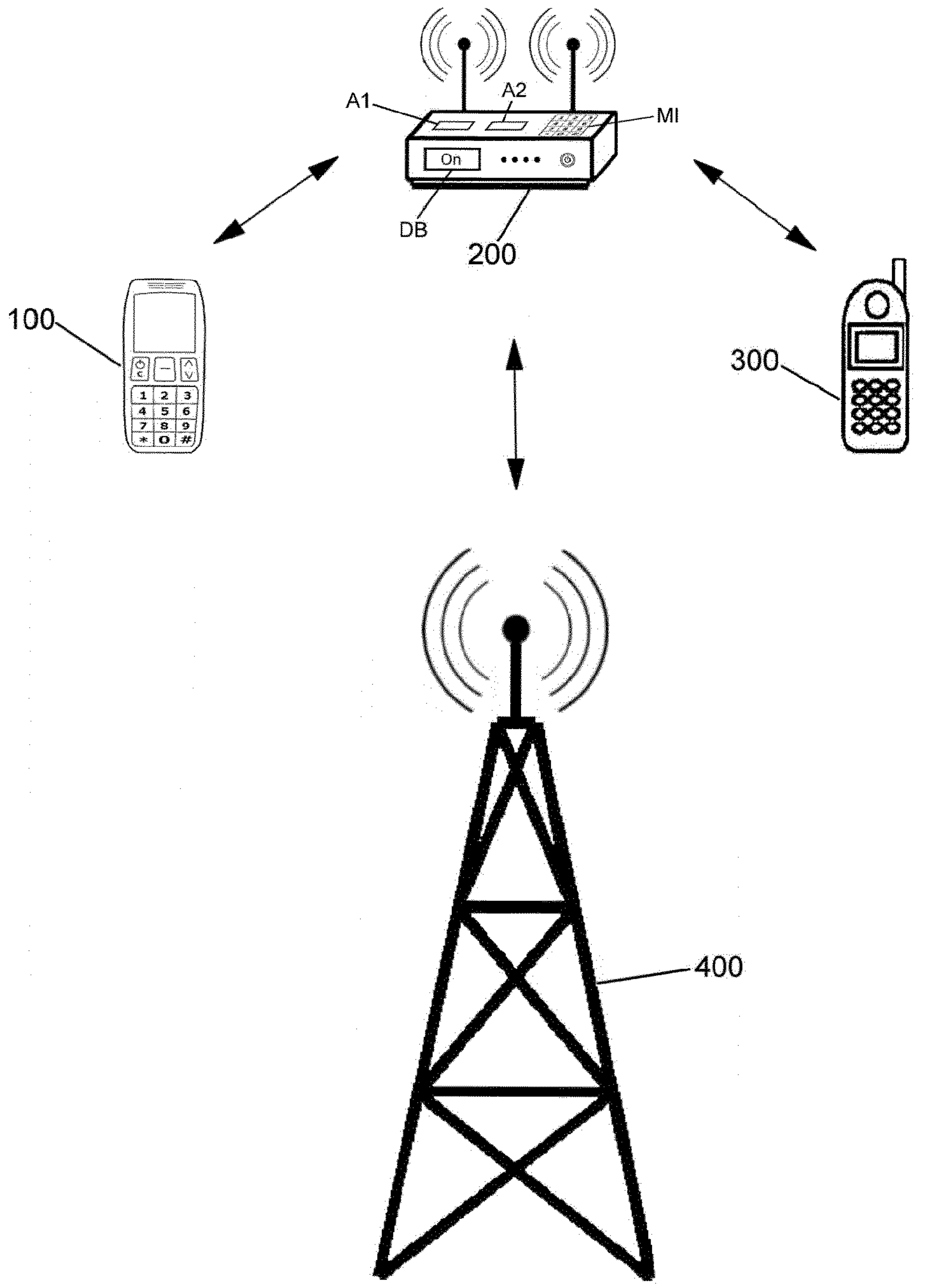

Fig. 4

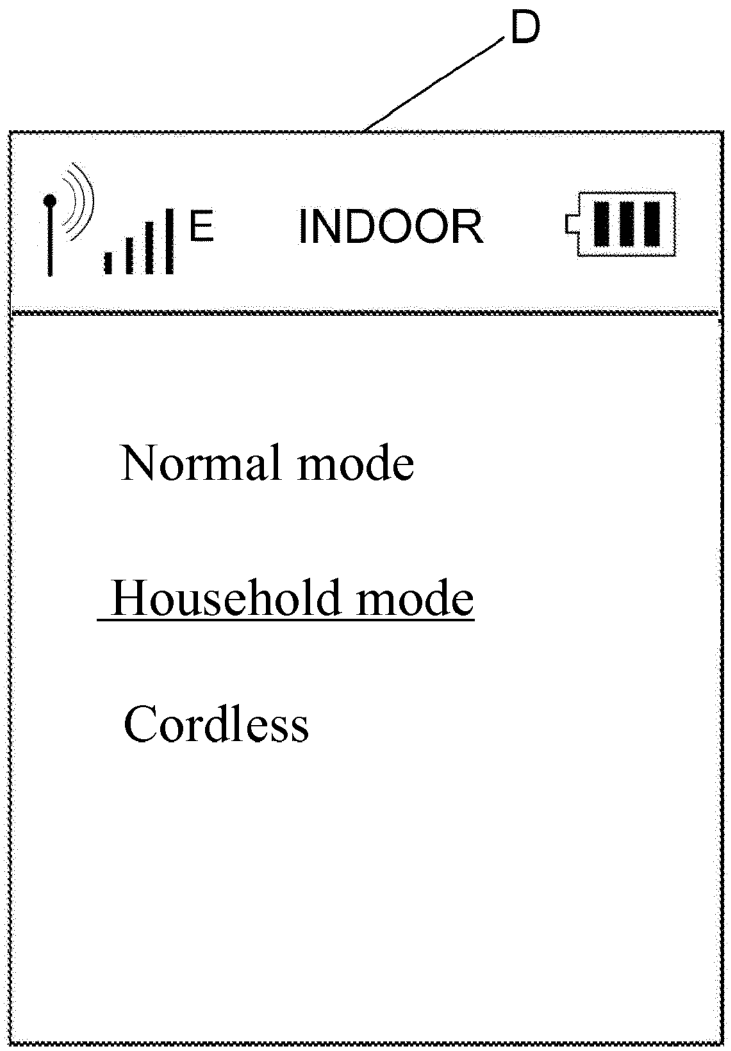

Fig. 5

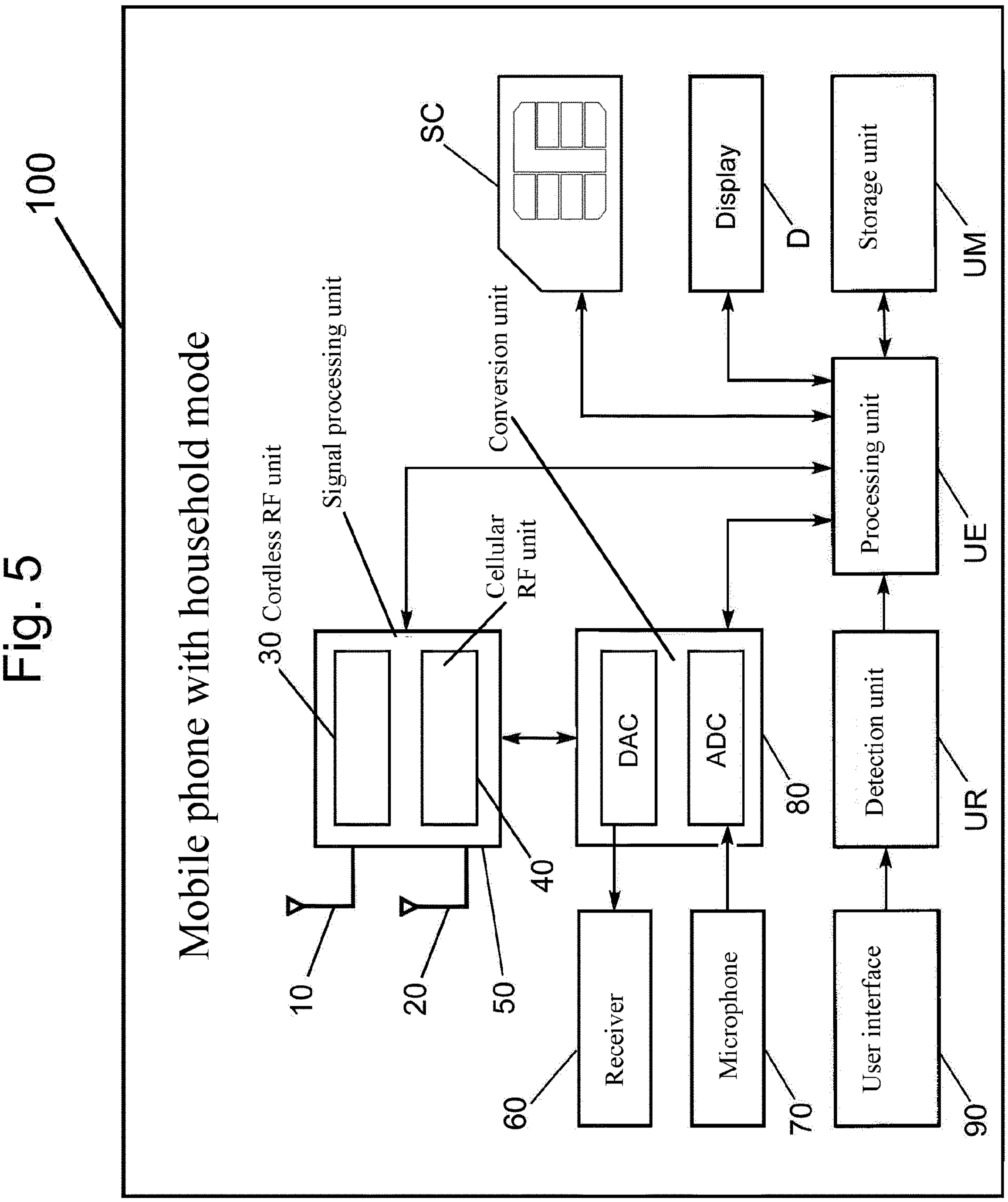
100
Mobile phone with household mode
10
20
50
30 Cordless RF unit
Signal processing unit
Cellular RF unit
40
Conversion unit
DAC
ADC
80
SC
Display
D
Storage unit
UM
Processing unit
UE
Detection unit
UR
Receiver
60
Microphone
70
User interface
90

Fig. 6

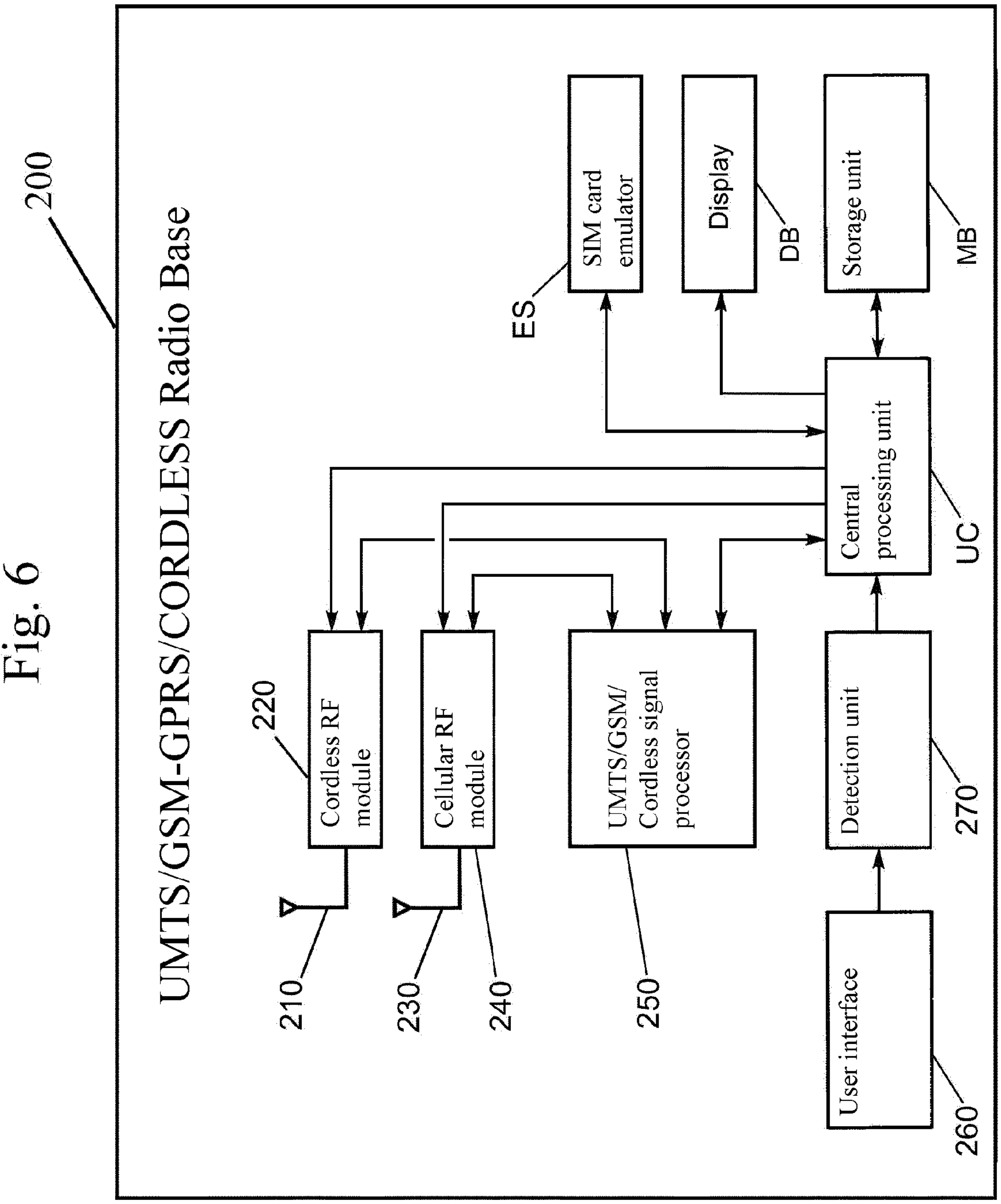
200
UMTS/GSM-GPRS/CORDLESS Radio Base
Cordless RF module
Cellular RF module
UMTS/GSM/ Cordless signal processor
SIM card emulator
Display
Storage unit
Central processing unit
Detection unit
User interface
210
220
230
240
250
260
270
ES
DB
MB
UC

Europäisches Patentamt
European Patent Office
Office européen des brevets

# EUROPEAN SEARCH REPORT

Application Number
EP 13 17 3354

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2007/153768 A1 (JAGADESAN BALAKUMAR [US] ET AL) 5 July 2007 (2007-07-05)<br>* paragraphs [0032] - [0040], [0066] - [0068] *<br>----- | 1-11 | INV.<br>H04M1/725 |
| A | US 6 453 171 B1 (AUVRAY GERARD [FR]) 17 September 2002 (2002-09-17)<br>* column 3, line 49 - line 64 *<br>* column 5, line 13 - line 28 *<br>----- | 1-11 | |
| | | | TECHNICAL FIELDS SEARCHED (IPC) |
| | | | H04M<br>H04W |

The present search report has been drawn up for all claims

1

| Place of search | Date of completion of the search | Examiner |
|---|---|---|
| The Hague | 4 July 2013 | Sorrentino, Andrea |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 13 17 3354

This annex lists the patent family members relating to the patent documents cited in the above-mentioned European search report.
The members are as contained in the European Patent Office EDP file on
The European Patent Office is in no way liable for these particulars which are merely given for the purpose of information.

04-07-2013

| Patent document cited in search report | Publication date | Patent family member(s) | Publication date |
|---|---|---|---|
| US 2007153768 A1 | 05-07-2007 | CN 101352052 A | 21-01-2009 |
| | | EP 1974556 A2 | 01-10-2008 |
| | | US 2007153768 A1 | 05-07-2007 |
| | | WO 2007079330 A2 | 12-07-2007 |
| US 6453171 B1 | 17-09-2002 | AU 2245999 A | 14-10-1999 |
| | | CA 2260404 A1 | 30-09-1999 |
| | | CN 1235471 A | 17-11-1999 |
| | | DE 69924046 D1 | 14-04-2005 |
| | | DE 69924046 T2 | 13-04-2006 |
| | | EP 0948223 A1 | 06-10-1999 |
| | | ES 2238817 T3 | 01-09-2005 |
| | | FR 2776884 A1 | 01-10-1999 |
| | | JP H11331924 A | 30-11-1999 |
| | | US 6453171 B1 | 17-09-2002 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **LJUSGLIMTEN.** Effects of mobile phone radiation upon the mammalian brain. FEB, 2008